# EUROPÄISCHE PATENTSCHRIFT

(11) **EP 1 659 126 B1**
(45) Veröffentlichungstag und Bekanntmachung des Hinweises auf die Patenterteilung: **16.07.2008**
(21) Anmeldenummer: 05024040.7
(22) Anmeldetag: 04.11.2005
(51) Int. Cl.: C07F 7/18

(54) **Fluorsilankondensationsprodukte, deren Herstellung und Verwendung zur Oberflächenmodifizierung**
Condensation products of fluorosilanes, their preparation and use for surface modification
Produit de condesantion de fluorosilanes, procede de fabrication de ces substances et utilisation comme agent de modification d'une surface

(30) Priorität: 23.11.2004 DE 102004056395
(43) Veröffentlichungstag der Anmeldung: 24.05.2006
(73) Patentinhaber: Clariant Produkte (Deutschland) GmbH, 65929 Frankfurt am Main (DE)
(72) Erfinder: Raab, Klaus, Dr., 84508 Burgkirchen (DE)

(56) Entgegenhaltungen:
- EP-A- 1 033 395
- US-A- 4 048 206
- DATABASE BEILSTEIN [Online] BEILSTEIN INSTITUTE FOR ORGANIC CHEMISTRY, FRANKFURT-MAIN, DE; XP002374102 gefunden im MDL & VORONKOV, M.G.: COLLECT. CZECH. CHEM. COMMUN., Bd. 42, 1977, Seiten 480-483,
- DATABASE BEILSTEIN [Online] BEILSTEIN INSTITUTE FOR ORGANIC CHEMISTRY, FRANKFURT-MAIN, DE; XP002374103 & VORONKOV, M. G. ET AL.: KHIM. FARM., ZH; RU, Bd. 18, Nr. 7, 1984, Seiten 811-816,
- DATABASE BEILSTEIN [Online] BEILSTEIN INSTITUTE FOR ORGANIC CHEMISTRY, FRANKFURT-MAIN, DE; XP002374104 Database accession no. Reaction ID 1109100 & VORONKOV, M. G. ET AL.: ZH. OBSHCH. KHIM. RU, Bd. 48, 1978, Seiten 2238-2245,

## Beschreibung

Die vorliegende Erfindung betrifft neue Fluorsilankondensationsprodukte, ein Verfahren zu deren Herstellung sowie deren Verwendung. Diese erfindungsgemäßen Kondensationsprodukte sind herstellbar durch Kondensation von fluorhaltigen Silanen und mehrfach funktionalisierten Alkoholen.

Fluorsilane vom Typ

R_{F}-CH₂-CH₂-SiCl₃ und R_{F}-CH₂-CH₂-Si(OR)₃

mit
- R_{F} =: fluorierter Alkylrest, wie CₙF₂ₙ₊₁
- R =: Alkylrest, wie CₙH₂ₙ₊₁
sind seit langem bekannt und können durch Hydrosilylierung von R_{F}-CH=CH₂ mit HSiCl₃ oder HSi(OR)₃ hergestellt werden. Die Verbindungen vom Typ R_{F}-CH₂-CH₂₋Si(OR)₃ lassen sich auch durch Alkoholyse von R_{F}-CH₂-CH₂-SiCl₃ mit einwertigen Alkoholen R-OH gewinnen.

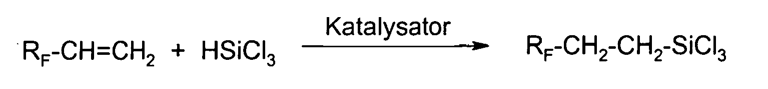

R_{F}-CH₂-CH₂SiCl₃ + 3 R-OH → R_{F}-CH₂-CH₂-Si(OR)₃ + 3 HCl

JP-50 097 616 beschreibt die H₂PtCl₆-katalysierte Hydrosilylierung von C₆F₁₃₋CH=CH₂ und HSiCl₃ sowie die nachfolgende Reaktion mit Ethanol zu C₆F₁₃-CH₂-CH₂-Si(O-C₂H₅)₃.

JP-11 189 597 und EP-838 467 offenbaren analoge Pt(O)-katalysierte Hydrosilylierungen.

JP-09 169 779 und JP-11 189 599 beschreiben Alkoholysereaktionen von R_{F}-CH₂-CH₂-SiCl₃ mit einwertigen Alkoholen und JP-10 167 767 das Alkoholyseprodukt mit Etheralkoholen wie Methyldiglykol.

Einen allgemeinen Überblick über Hydrosilylierungsprodukte und deren Folgechemie gibt beispielsweise J. L. Speier, Advances in Organometallic Chemistry, Vol. 17 (1979), 407.

Aufgabe vorliegender Erfindung war es, gut wirksame Beschichtungsmaterialien für die Hydrophob-/Oleophobausrüstung von Oberflächen bereitzustellen. Diese Beschichtungsmaterialien sollten hinreichend wasserlöslich sein, um ihre wasserbasierende Anwendung zu ermöglichen, und es sollte sich um möglichst wenig flüchtige Verbindungen handeln.

Überraschenderweise wurde gefunden, dass Verbindungen, die oligomere oder polymere Fluorsilankondensationsprodukte sind, und im Folgenden auch einfach Kondensationsprodukte genannt werden, welche durch eine Kondensationsreaktion oder eine Polykondensationsreaktion von mindestens zwei Reaktionspartnern (A) und (B) herstellbar sind, diese Aufgabe lösen.

Gegenstand der Erfindung sind daher Verbindungen, herstellbar durch die Umsetzung fluorhaltiger Silane (A)

R_{F}-CH₂-CH₂-SiX₃ (A)

worin
- R_{F}: einen perfluorierten oder teilfluorierten Alkylrest,
- X: Cl oder O-CₙH₂ₙ₊₁ und
- n: eine ganze Zahl von 1 bis 20 bedeuten
mit einem oder mehreren Alkoholen der Formel (B)

R(OH)ₘ(NH₂)p (B)

worin
R für einen aus C, H und O bestehenden organischen Rest steht, und für m und p entweder
   a) m ≥ 2 und p = 0, oder
   b) m ≥ 1 und p ≥ 1 gilt.

Ein weiterer Gegenstand der Erfindung ist ein Verfahren zur Herstellung der erfindungsgemäßen Verbindungen durch Umsetzung von fluorhaltigen Silanen der Formel (A) mit Alkoholen der Formel (B).

Ein weiterer Gegenstand der Erfindung sind Formulierungen, enthaltend mindestens eine der erfindungsgemäßen Verbindungen, und eine oder mehrere weitere Komponenten ausgewählt aus den Gruppen
(a) Lösemittel, insbesondere Alkohole, besonders bevorzugt Isopropanol
(b) Wasser
(c) neutrale, anionische, kationische oder amphotere Tenside
(d) Alkoxysilane, insbesondere Tetraethoxysilan
(e) Säuren
(f) Basen.

Ein weiterer Gegenstand der Erfindung ist die Verwendung der erfindungsgemäßen Verbindungen oder der oben beschriebenen Formulierungen für die Modifizierung der Eigenschaften von Oberflächen und kleinen Partikeln.

Ein weiterer Gegenstand der Erfindung ist die Verwendung der erfindungsgemäßen Verbindungen oder der oben beschriebenen Formulierungen für die Hydrophobierung und Oleophobierung von Oberflächen aus Glas, Keramik, mineralischen Baustoffen, Lacken, Metall, Kunststoff, Holz, Papier oder textilen Geweben sowie von kleinen Partikeln.

Ein weiterer Gegenstand der Erfindung ist ein Verfahren zur Modifizierung der Eigenschaften von Oberflächen und kleinen Partikeln, indem man die erfindungsgemäßen Verbindungen oder die oben beschriebenen Formulierungen auf diese aufbringt.

Ein weiterer Gegenstand der Erfindung ist ein Verfahren zur Hydrophobierung und Oleophobierung von Oberflächen aus Glas, Keramik, mineralischen Baustoffen, Lacken, Metall, Kunststoff, Holz, Papier oder textilen Geweben sowie von kleinen Partikeln, indem man die erfindungsgemäßen Verbindungen oder die oben beschriebenen Formulierungen auf diese aufbringt.

Bei der Kondensation oder Polykondensation von (A) und (B) wird HX abgespalten. Im Falle eines sehr großen molaren Überschusses an (B), bevorzugt wird dann (B) vorgelegt und (A) zudosiert, bilden sich hauptsächlich Monomere der Formel (A)(B)₃ in einer Mischung mit überschüssigem (B). Oligomere und Polymere mit ansteigenden Molmassen entstehen in immer größeren Anteilen, wenn das Molverhältnis der reaktiven Gruppen in (A) und der reaktiven Gruppen in (B) immer stärker dem genauen stöchiometrischen Verhältnis angepasst wird. Falls (B) Aminogruppen enthält und fluorhaltige Silane (A) mit X = Cl eingesetzt werden, enthalten die erfindungsgemäßen Kondensationsprodukte auch Ammoniumgruppen mit Chlorid Cl⁻ als Gegenionen. Die oligomeren und polymeren Kondensationsprodukte können linear, cyclisch, verzweigt oder vernetzt aufgebaut sein. Die Struktur und die Eigenschaften der Kondensationsprodukte lassen sich beeinflussen durch die Wahl von (A) und (B), die Zahl der reaktiven Gruppen in (B), das Mengenverhältnis von (A) zu (B), die Art der Dosierung, Vermischung und Zugabereihenfolge von (A) zu (B), von (B) zu (A) oder von (A) und (B) gleichzeitig sowie vom Grad der Abtrennung des abgespaltenen HX vom Kondensationsprodukt.

In einer bevorzugten Ausführungsform steht in der Formel (A) für die fluorhaltigen Silane im Falle X = O-CₙH₂ₙ₊₁ n für eine ganze Zahl von 1 bis 4.

In einer bevorzugten Ausführungsform steht R_{F} für einen Perfluoralkylrest mit 1 bis 24, insbesondere 2 bis 16 und speziell 3 bis 6 Kohlenstoffatomen. In einer weiteren bevorzugten Ausführungsform steht R_{F} für einen Rest der Formel (1)

R_{F}'- (CH₂-CF₂)_{b} - (1)

worin R_{F}'- eine Perfluoralkylgruppe mit 1 bis 16, insbesondere 2 bis 6 Kohlenstoffatomen und b eine ganze Zahl von 1 bis 12 bedeutet.
In einer weiteren bevorzugten Ausführungsform steht R_{F} für einen Rest der Formel (2)

F - (CF₂ - CF₂)_{d} - (2)

worin d für eine ganze Zahl von 1 bis 12 steht.

Die Alkohole der Formel (B)

R(OH)ₘ(NH₂)ₚ (B)

können ausgewählt werden aus den Gruppen: Alkandiole, Alkantriole, Alkantetraole, Kohlenhydrate, zu Polyolen reduzierte Kohlenhydrate, Oligoalkylenglykole, Polyethylenglykole, Polypropylenglykole, Polybutylenglykole, Ethylenoxid-Propylenoxid-Copolymere, Polyglycerine;

Oxethylate und Propoxylate von Alkandiolen, Alkantriolen, Alkantetraolen, Kohlenhydraten, Polyolen aus reduzierten Kohlenhydraten und von Polyglycerinen;

Aminoalkohole, Polyglykolamine, Oxethylate und Propoxylate von Aminoalkoholen und von Polyglykolaminen.

Bevorzugt werden zweiwertige Etheralkohole wie Diethylenglykol, Triethylenglykol, Tetraethylenglykol und Polyglykole mit einer mittleren Molmasse zwischen 200 g/mol und 1000 g/mol eingesetzt.

Der organische Rest R umfasst vorzugsweise 1 bis 50, insbesondere 2 bis 30 Kohlenstoffatome.

Die erfindungsgemäßen Kondensationsprodukte können außer den beiden Reaktionspartnern (A) und (B) weitere Reaktionspartner (C) enthalten. Der oder die weiteren Reaktionspartner (C) werden ausgewählt aus der Gruppe Wasser, Alkylpolyglykole oder Silane der Formel

SiX₄, R'SiX₃, R'₂SiX₂, R'₃SiX

mit
- X =: Cl oder Alkoxy, insbesondere Methoxy oder Ethoxy,
- R' =: Alkyl, insbesondere Methyl oder Alkenyl, insbesondere Vinyl oder H.

In diesem Fall werden die Reaktionspartner (A), (B) und ein oder mehrere Verbindungen gemäß (C) gemeinsam unter Abspaltung von HX kondensiert oder polykondensiert. Die Struktur und die Eigenschaften dieser Kondensationsprodukte lassen sich beeinflussen durch die Wahl von (A), (B) und (C), die Zahl der reaktiven Gruppen in (B) und (C), das Mengenverhältnis von (A), (B) und (C), die Zugabereihenfolge von (A), (B) und (C) und die Art der Dosierung und Vermischung sowie vom Grad der Abtrennung des abgespaltenen HX vom Kondensationsprodukt. Einwertige Alkohole wie Alkylpolyglykole vermindern die mittlere Molmasse und den Vernetzungsgrad und Verbindungen mit 3 oder 4 funktionellen Gruppen wie R'SiX₃ oder SiX₄ erhöhen ihn.

Die Mengenverhältnisse von (A), (B) und gegebenenfalls (C) können in weiten Grenzen variiert werden. Meist wird (C) in geringeren Mengenanteilen als (A) oder (B) eingesetzt. Die Kondensations- bzw. Polykondensationsreaktion erfolgt unter guter Durchmischung bei Temperaturen, bei denen die entstehenden Kondensationsprodukte flüssig sind. In der Regel liegen die Reaktionstemperaturen im Falle von X = Cl zwischen 50°C und 200°C und im Falle von X = O-CₙH₂ₙ₊₁, n = 1, 2, 3 oder 4 zwischen 100°C und 250°C. Es sind auch höhere Temperaturen möglich, wenn der Schmelzbereich oder die Viskosität des Kondensationsprodukts dies erfordern. Die Umsetzung kann unter Überdruck, bei Normaldruck oder unter vermindertem Druck durchgeführt werden. Im Falle von X = Cl wird Normaldruck und insbesondere verminderter Druck bevorzugt, um das entstehende HCl-Gas rasch aus der Reaktionsmischung zu entfernen. Der im Falle X = O-CₙH₂ₙ₊₁ im Laufe der Kondensationsreaktion entstehende, einwertige Alkohol CₙH₂ₙ₊₁-OH kann kontinuierlich oder absatzweise, vollständig oder auch nur teilweise aus der Reaktionsmischung abdestilliert werden. Abhängig von (A), (B) und gegebenenfalls (C), dem Kondensationsgrad, der Molmassenverteilung und dem Vernetzungsgrad, liegen die Kondensationsprodukte bei Raumtemperatur in flüssiger, zähflüssiger, gelartiger oder fester Form vor.

Die erfindungsgemäßen Kondensationsprodukte werden bevorzugt in Form einer verdünnten, in der Regel flüssigen, Formulierung angewandt. Dabei kann es sich um Lösungen, Emulsionen oder Suspensionen handeln. Abhängig von (A), (B) und gegebenenfalls (C), von der Molmasse und vom Verzweigungs- und Vernetzungsgrad können verschiedene Lösemittel oder Dispergiermittel eingesetzt werden. Als Lösemittel oder Dispergiermittel kommen beispielsweise Wasser oder Alkohole in Frage. Unter den Alkoholen werden bevorzugt eingesetzt die Alkohole der Formel (B), falls diese bei Raumtemperatur flüssig sind und kurzkettige, aliphatische, einwertige Alkohole, besonders bevorzugt Isopropanol oder Ethanol. Die Konzentration der Kondensationsprodukte in den Formulierungen liegt in der Regel zwischen 0,01 % und 30 %, oft bevorzugt zwischen 0,5 % und 5 %.

Neben dem Kondensationsprodukt und einem oder mehreren Löse- oder Dispergiermittel können die Formulierungen noch weitere Komponenten wie neutrale, anionische, kationische oder amphotere Tenside, Säuren, Basen und Alkoxysilane enthalten. Diese weiteren Komponenten beeinflussen die Lagerstabilität und Haltbarkeit der Formulierungen, deren Viskosität und Verlaufsverhalten auf Oberflächen sowie die Art und Weise, wie Oberflächeneigenschaften durch die jeweilige Formulierung modifiziert werden. Als Tenside können beispielsweise Alkoholethoxylate, Alkoholalkoxylate, Ethylenoxid-Propylenoxid-Polymerisate, Aminoxide, Alkylsulfate, Alkylethersulfate, Alkylarylethersulfate, Alkansulfonate, Olefinsulfonate, Alkylpolyglykoletherphosphate, quaternäre Ammoniumverbindungen oder Betaine eingesetzt werden. Zur Einstellung des pH-Werts können verwendet werden: anorganische Säuren wie beispielsweise Schwefelsäure, Alkalimetallhydrogensulfat; organische Säuren wie beispielsweise Ameisensäure, Essigsäure, Propionsäure, Zitronensäure sowie anorganische Basen wie beispielsweise Natriumhydroxid, Kaliumhydroxid, Alkalimetallcarbonat, Alkalimetallhydrogencarbonat und organische Basen wie beispielsweise Amine oder Alkalimetallacetat. Als Alkoxysilane können bevorzugt Tetraalkoxysilane, insbesondere Tetraethoxysilan, als Formulierungskomponente zugesetzt werden.

Zur Herstellung der Formulierungen werden die Kondensationsprodukte bei Raumtemperatur oder bei erhöhter Temperatur, in der Regel unter 100°C, in Lösemitteln oder Dispergiermitteln, gegebenenfalls unter Zusatz weiterer Hilfsstoffe, unter Rühren gelöst oder suspendiert. Unter Hilfsstoffen sind insbesondere neutrale, anionische, kationische oder amphotere Tenside, Alkoxysilane wie beispielsweise Tetraethoxysilan sowie Säuren und Basen zu verstehen.

Die erfindungsgemäßen Kondensationsprodukte und deren Formulierungen können auf Oberflächen aus beispielsweise Glas, Keramik, mineralischen Baustoffen, Lacken, Metall, Kunststoff, Holz, Papier oder textilen Geweben aufgebracht werden. Die Nachkondensation und Ausbildung einer festhaftenden, dünnen Oberflächenschicht erfolgt bei Raumtemperatur oder bei erhöhten Temperaturen, die abhängig von der Art der Oberfläche, bis zu etwa 300°C betragen können. Auch kleine Partikel im Größenbereich von µm oder nm lassen sich damit beschichten. Diese Oberflächenbeschichtungen verleihen den damit ausgerüsteten Oberflächen, abhängig von den Applikationsbedingungen, hydrophobe, oleophobe, schmutz- und farbabweisende Eigenschaften.

Die Erfindung wird nun an Beispielen noch näher erläutert.

### Beispiel 1:

118,3 g (0,788 mol) Triethylenglykol mit einem Wassergehalt unter 0,1 % wurden in einem 250 ml-Glasrundkolben, ausgestattet mit Magnetrührfisch, Thermometer, Tropftrichter mit Tauchrohr, Stickstoffanschluss, Vakuumanschluss und beheizbarem Ölbad, vorgelegt und bei 80 °C und ca. 20 mbar unter Einleiten von trockenem Stickstoff und Rühren entwässert. Die Stickstoffeinleitung wurde danach beendet und der Kolbeninhalt auf 150°C hochgeheizt. Bei 150°C und 20 - 50 mbar Druck wurden unter intensivem Rühren 31,7 g (0,0658 mol) Perfluorhexylethyltrichlorsilan der Formel C₆F₁₃-CH₂-CH₂-SiCl₃ innerhalb von 1,5 Stunden über den Tropftrichter langsam und kontinuierlich zugetropft. Das dabei entstehende HCl-Gas wurde sofort über das Vakuumsystem abgezogen. Nach dem Zutropfen des Perfluorhexylethyltrichlorsilans wurde noch eine Stunde bei 150°C und ca. 50 mbar Druck unter Rühren trockener Stickstoff in das klare, flüssige Reaktionsprodukt eingeperlt und HCl-Restmengen ausgetrieben. Bei Raumtemperatur war das Kondensationsprodukt farblos und flüssig. Die mittels GPC in THF als Laufmittel (Molmassenstandard: PEG) ermittelte Molmasse betrug etwa 700 g/mol. ¹H-NMR und ²⁹Si-NMR bestätigten folgende Struktur des Reaktionsprodukts (Hauptkomponenten):
C₆F₁₃-CH₂-CH₂-Si(O-CH₂-CH₂-O-CH₂-CH₂-O-CH₂-CH₂-OH)₃ gelöst in überschüssigem Triethylenglykol.

### Beispiel 2:

72,5 g (0,483 mol) Triethylenglykol mit einem Wassergehalt unter 0,1 % wurden in einem 250 ml-Glasrundkolben, ausgestattet mit Magnetrührfisch, Thermometer, Tropftrichter mit Tauchrohr, Stickstoffanschluss, Vakuumanschluss und beheizbarem Ölbad, vorgelegt und bei 80-100°C bei ca. 20 mbar unter Einleiten von trockenem Stickstoff und Rühren entwässert. Die Stickstoffeinleitung wurde danach beendet und der Kolbeninhalt auf 150°C hochgeheizt. Bei 150°C und 20 - 50 mbar Druck wurden unter intensivem Rühren 77,5 g (0,161 mol) Perfluorhexylethyltrichlorsilan der Formel C₆F₁₃-CH₂-CH₂-SiCl₃ innerhalb von 2 Stunden über den Tropftrichter langsam und kontinuierlich zugetropft. Das dabei entstehende HCl-Gas wurde sofort über das Vakuumsystem abgezogen. Nach dem Zutropfen des Perfluorhexylethyltrichlorsilans wurde noch eine Stunde bei 150°C und ca. 50 mbar Druck unter Rühren trockener Stickstoff in das klare, flüssige Reaktionsprodukt eingeperlt und HCl-Restmengen ausgetrieben. Bei Raumtemperatur war das Kondensationsprodukt farblos und dickflüssig. Der mittels GPC in THF als Laufmittel (Molmassenstandard: PEG) ermittelte Molmassenbereich lag zwischen etwa 700 und 30000 g/mol. Das Endprodukt liegt nach diesen GPC-Befunden und NMR-Daten als Mischung von monomeren, oligomeren und polymeren Kondensationsprodukten sowie geringen Anteilen an freiem Triethylenglykol vor.

### Beispiele 3 bis 7:

Beispiel 1 wurde mit anderen Alkoholen und anderen Einsatzmengen wiederholt. Die Reaktionsbedingungen und die Vorgehensweise in Beispiel 3 - 7 entsprachen denen von Beispiel 1.

| Beispiel | vorgelegt wurden | zugetropft wurden | Aussehen des Kondensationsprodukts bei 20°C | Molmassenbereich laut GPC in THF (Molmassenstandard: PEG) |
|---|---|---|---|---|
| 3 | 97,5 g (0,325 mol) Polyethylenglykol 300 | 52,5 g (0,109 mol) C₆F₁₃-CH₂-CH₂-SiCl₃ | farblos, dickflüssig | 600 - 26000 g/mol |
| 4 | 118,2 g (0,394 mol) Polyethylenglykol 300 | 31,8 g (0,0660 mol) C₆F₁₃-CH₂-CH₂-SiCl₃ | farblos, dickflüssig | 600 - 7000 g/mol |
| 5 | 132,2 g (0,441 mol) Polyethylenglykol 300 | 17,8 g (0,0370 mol) C₆F₁₃-CH₂-CH₂-SiCl₃ | farblos, flüssig | 700 - 2800 g/mol |
| 6 | 107,0 g (0,260 mol) Polyethylenglykol 400 | 43,0 g (0,0893 mol) C₆F₁₃-CH₂-CH₂-SiCl₃ | farblos, dickflüssig | 1300-25000 g/mol |
| 7 | 136,3 g (0,341 mol) Polyethylenglykol 400 | 13,7 g (0,0285 mol) C₆F₁₃-CH₂-CH₂-SiCl₃ | farblos, dickflüssig | 700 - 3700 g/mol |

### Beispiel 8:

105,5 g (0,264 mol) Polyethylenglykol 400 und 1,6 g (0,089 mol) Wasser wurden in einem 250 ml-Glasrundkolben, ausgestattet mit Magnetrührfisch, Thermometer, Tropftrichter mit Tauchrohr, Stickstoffanschluss, Vakuumanschluss und beheizbarem Ölbad, vorgelegt. Bei 150°C und ca. 50 mbar Druck wurden unter intensivem Rühren 42,9 g (0,0891 mol) Perfluorhexylethyltrichlorsilan der Formel C₆F₁₃-CH₂-CH₂-SiCl₃ innerhalb von 2 Stunden über den Tropftrichter langsam und kontinuierlich zugetropft. Das dabei entstehende HCl-Gas wurde sofort über das Vakuumsystem abgezogen. Nach dem Zutropfen des Perfluorhexylethyltrichlorsilans wurde noch eine Stunde bei 150°C und ca. 50 mbar Druck unter Rühren trockener Stickstoff in das flüssige Reaktionsprodukt eingeperlt und HCl-Restmengen ausgetrieben. Bei Raumtemperatur war das Kondensationsprodukt farblos und dickflüssig. Der mittels GPC in THF als Laufmittel (Molmassenstandard: PEG) ermittelte Molmassenbereich lag zwischen etwa 900 und 23000 g/mol. Das Endprodukt liegt nach diesen GPC-Befunden und NMR-Daten als Mischung von monomeren, oligomeren und polymeren Kondensationsprodukten vor.

### Beispiel 9:

170,2 g (0,288 mol) Perfluoralkylethyltriethoxysilan 612 der Formel F(CF₂-CF₂)ₙ-CH₂₋CH₂-Si(O-C₂H₅)₃ (n = 3, 4, 5, 6, 7) und 129,8 g (0,865 mol) Triethylenglykol mit einem Wassergehalt unter 0,1 % wurden gemeinsam in einem 500 ml-Glasrundkolben vorgelegt, der ausgestattet war mit PTFE-Flügelrührer, 3 Thermometer für die Messung von Innen-, Übergangs- und Öltemperatur, Destillationsbrücke mit graduierter Vorlage, Stickstoffanschluss und beheizbarem Ölbad. Die anfangs zweiphasige Reaktionsmischung wurde bestickstofft und unter Rühren bei Normaldruck auf 190°C erhitzt. Die Reaktionstemperatur wurde langsam von 190°C auf 220°C erhöht. Nach Abdestillation von einem Moläquivalent Ethanol (13 g) und nach Abdestillation von zwei Moläquivalenten Ethanol (26 g) wurden jeweils Proben des flüssigen, inzwischen einphasigen Kondensationsprodukts aus dem 500 ml-Glasrundkolben gezogen (Probe 1 und 2). Gegen Reaktionsende destillierte kein Ethanol mehr über. Insgesamt wurde 7,3 Stunden bei 190 - 220°C gerührt (Endprobe).

| | Aussehen bei 20°C | Molmassenbereich laut GPC in THF (Molmassenstandard: PEG) |
|---|---|---|
| Probe 1 | flüssig, blassgelb | 300 - 3200 g/mol |
| Probe 2 | flüssig, mittelviskos, gelb | 300 - 4700 g/mol |
| Endprobe | dickflüssig, gelb | 300 - 12000 g/mol |

Nach den NMR-Befunden liegen unter anderem monomere Verbindungen der Formel F(CF₂-CF₂)ₙ-CH₂-CH₂-Si(O-C₂H₅)₃-ₘ[O-CH₂-CH₂-O-CH₂-CH₂-O-CH₂-CH₂₋OH]ₘ, m = 0, 1, 2 und 3, vor. Der Anteil der Verbindungen mit m = 3 und auch der Anteil von oligomeren und polymeren Kondensationsprodukten wächst in der Reihe Probe 1 → Probe 2 → Endprobe an. Probe 1, Probe 2 und die Endprobe sind beispielsweise löslich in Isopropanol, Aceton oder Tetrahydrofuran (THF).

### Beispiel 10:

Beispiel 9 wurde mit Glycerin an Stelle von Triethylenglykol wiederholt. Eingesetzt wurden 204,4 g (0,346 mol) Perfluoralkylethyltriethoxysilan 612 der Formel F(CF₂-CF₂)ₙ-CH₂-CH₂-Si(O-C₂H₅)₃ (n = 3, 4, 5, 6, 7) und 95,6 g (1,04 mol) Glycerin. Die Reaktionstemperatur betrug 190°C und die gesamte Reaktionszeit 6 Stunden (Endprobe).

| | Aussehen bei 20°C | Molmassenbereich des THF-löslichen Anteils laut GPC in THF (Molmassenstandard: PEG) |
|---|---|---|
| Probe 1 (nach Abdestillation von 16 g Ethanol) | flüssig, zweiphasig, nahezu farblos | 300 - 3200 g/mol* |
| Probe 2 (nach Abdestillation von 32 g Ethanol) | fest, wachsartig, weiß | 600-3200 g/mol* |
| Endprobe | fest, wachsartig, weiß | 800 - 3200 g/mol* |

| | | |
|---|---|---|
| * Nur der THF-lösliche Anteil wurde erfasst. Vor allem die Endprobe löste sich nur teilweise in THF. Die Molmassenobergrenze liegt wahrscheinlich deutlich höher. | | |

### Beispiel 11:

31,5 g (0,0617 mol) Perfluorhexylethyltriethoxysilan der Formel C₆F₁₃-CH₂-CH₂-Si(O-C₂H₅)₃, 255,7 g (0,639 mol) Polyethylenglykol 400 und 12,8 g (0,0615 mol) Tetraethoxysilan der Formel Si(O-C₂H₅)₄ wurden gemeinsam in einem 500 ml-Glasrundkolben vorgelegt, der ausgestattet war mit PTFE-Flügelrührer, 3 Thermometer für die Messung von Innen-, Übergangs- und Öltemperatur, Destillationsbrücke mit graduierter Vorlage, Stickstoffanschluss und beheizbarem Ölbad. Die Reaktionsmischung wurde bestickstofft und unter Rühren bei Normaldruck auf 170°C erhitzt. Das freiwerdende Ethanol wurde abdestilliert. Die Reaktionstemperatur wurde allmählich bis auf 210°C erhöht. Nach 6,25 Stunden wurde die Reaktion abgebrochen.

Das Endprodukt war gelblich und bei 20°C flüssig und mittelviskos. Der mittels GPC in THF als Laufmittel (Molmassenstandard: PEG) ermittelte Molmassenbereich lag zwischen etwa 900 und 20000 g/mol. Geeignete Lösungsmittel waren Isopropanol, Wasser, Aceton, THF oder Polyethylenglykole.

### Beispiel 12:

218,9 g (0,429 mol) Perfluorhexylethyltriethoxysilan der Formel C₆F₁₃-CH₂-CH₂-Si(O-C₂H₅)₃ und 81,1 g (1,33 mol) Ethanolamin der Formel HO-CH₂-CH₂-NH₂ wurden in einem 500 ml-Glasrundkolben vorgelegt, der ausgestattet war mit PTFE-Flügelrührer, 3 Thermometer für die Messung von Innen-, Übergangs- und Öltemperatur, Destillationsbrücke mit beheizbarem aufsteigenden Kühler (80°C), absteigendem Kühler und graduierter Vorlage, Stickstoffanschluss und Heizpilz mit Relais. Die Reaktionsmischung wurde bestickstofft und unter Rühren bei Normaldruck auf 120°C erhitzt. Das freiwerdende Ethanol wurde abdestilliert. Die Reaktionstemperatur wurde allmählich bis auf 200°C erhöht. Nach 6,75 Stunden wurde die Reaktion abgebrochen.

Das Endprodukt mit der Hauptkomponente der Formel C₆F₁₃-CH₂-CH₂-Si(O-CH₂-CH₂-NH₂)₃ (¹H-NMR und ²⁹Si-NMR) war gelblich und bei 20°C flüssig und mittelviskos. Die Verbindung löste sich beispielsweise in Isopropanol, Tetrahydrofuran oder Chloroform.

### Beispiel 13:

183,1 g (0,359 mol) Perfluorhexylethyltriethoxysilan der Formel C₆F₁₃-CH₂-CH₂-Si(O-C₂H₅)₃ und 116,9 g (1,11 mol) 2-(2-Aminoethoxy)-ethanol der Formel H(O-CH₂-CH₂)₂-NH₂ wurden in einem 500 ml-Glasrundkolben vorgelegt, der ausgestattet war mit PTFE-Flügelrührer, 3 Thermometer für die Messung von Innen-, Übergangs- und Öltemperatur, Destillationsbrücke mit beheizbarem aufsteigenden Kühler (80°C), absteigendem Kühler und graduierter Vorlage, Stickstoffanschluss und Heizpilz mit Relais. Die Reaktionsmischung wurde bestickstofft und unter Rühren bei Normaldruck auf 125°C erhitzt. Das freiwerdende Ethanol wurde abdestilliert. Die Reaktionstemperatur wurde allmählich bis auf 200°C erhöht. Nach 7 Stunden wurde die Reaktion abgebrochen.

Das Endprodukt mit der Hauptkomponente der Formel C₆F₁₃-CH₂-CH₂-Si[(O-CH₂-CH₂)₂-NH₂)]₃ (¹H-NMR und ²⁹Si-NMR) war gelblich und bei 20°C flüssig und mittelviskos. Die Verbindung löste sich beispielsweise in Isopropanol, Tetrahydrofuran oder Chloroform.

### Beispiel 14:

In der folgenden Tabelle sind Formulierungen aufgeführt, die durch Mischen der erfindungsgemäßen Kondensationsprodukte der Beispiele 1 bis 13 mit Lösemitteln, Dispergiermitteln und weiteren Zusatzstoffen wie beispielsweise Tensiden oder Zusätzen zur Einstellung des pH-Werts erhalten wurden.

In allen aufgeführten Formulierungsbeispielen wurden 1,5 g des erfindungsgemäßen Kondensationsprodukts eingesetzt und unter Rühren oder Schütteln mit den Zusatzstoffen vermischt.

| Formulierung Nr. | Kondensationsprodukt aus Beispiel Nr. | Zusatzstoff/Menge des Zusatzstoffs |
|---|---|---|
| 1 | 1 | Wasser/48,5 g |
| 2 | 1 | Wasser/48,45 g Genaminox LA®/0,05 g |
| 3 | 1 | Isopropanol/48,5 g |
| 4 | 2 | Isopropanol/48,35 g Schwefelsäure konz./0,15 g |
| 5 | 2 | Isopropanol/45,85 g Tetraethoxysilan/2,5 g Schwefelsäure konz./0,15 g |
| 6 | 2 | Triethylenglykol/48,5 g |
| 7 | 3 | Polyethylenglykol 300/48,5 g |
| 8 | 4 | Wasser/48,45 g Genaminox LA®/0,05 g |
| 9 | 8 | Wasser/48,5 g |
| 10 | 8 | Wasser/48,45 g Genaminox LA®/0,05 g |
| 11 | 8 | Isopropanol 48,5 g |
| 12 | 9/Probe 1 | Isopropanol/48,5 g |
| 13 | 9/Probe 2 | Isopropanol/48,5 g |
| 14 | 9/Endprobe | Wasser/48,5 g |
| 15 | 9/Endprobe | Wasser/48,45 g Genapol LRO flüssig® /0,05 g |
| 16 | 10/Probe 2 | Isopropanol/45,85 g Tetraethoxysilan/2,5 g Schwefelsäure konz./0,15 g |
| 17 | 10/Endprobe | Isopropanol/48,5 g |
| 18 | 11 | Wasser/48,45 g Genaminox LA®/0,05 g |
| 19 | 12 | Isopropanol/48,5g |
| 20 | 12 | Isopropanol/48,35 g Essigsäure konz./0,15 g |
| 21 | 13 | Isopropanol/48,5 g |
| 22 | 13 | Isopropanol/48,35 g Essigsäure konz./0,15 g |

| | | |
|---|---|---|
| Genaminox LA® : Lauryldimethylaminoxid (30 %ig in Wasser) | | |
| Genapol LRO flüssig® : C₁₂/₁₄-Alkyldiglykolethersulfat, Na-Salz (27 %ig in Wasser) | | |

Die Formulierungen Nr. 1 bis 22 wurden mit einem Polyamidtuch auf zuvor mit Isopropanol gereinigte Objektträger aus Glas durch Wischen aufgebracht. Nach einem Tag bei Raumtemperatur wurden die mit den Formulierungen beschichteten Glasflächen mit einer unbeschichteten Glasfläche im Verhalten gegen Wassertropfen verglichen. Die hohe, kugelförmige Form der Wassertropfen und das verbesserte Abfließverhalten zeigten, dass die Formulierungen Nr. 1 bis 22 den Glasflächen verstärkte hydrophobe Eigenschaften verliehen hatten.

## Patentansprüche

1. Verbindungen, herstellbar durch die Umsetzung fluorhaltiger Silane (A)
R_{F}-CH₂-CH₂-SiX₃ (A)
worin
R_{F} einen perfluorierten oder teilfluorierten Alkylrest,
X Cl oder O-CₙH₂ₙ₊₁ und
n eine ganze Zahl von 1 bis 20 bedeuten
mit einem oder mehreren Alkoholen der Formel (B)
R(OH)ₘ(NH₂)ₚ (B)
worin
R für einen aus C, H und O bestehenden organischen Rest steht, und für m und p entweder
a) m ≥ 2 und p = 0, oder
b) m ≥ 1 und p ≥ 1 gilt.

2. Verbindungen gemäß Anspruch 1, bei denen R_{F} für einen Rest der Formel (1)
R_{F}' - (CH₂-CF₂)_{b} - x (B)
steht, worin R_{F}'- eine Perfluoralkylgruppe mit 1 bis 16 Kohlenstoffatomen und b eine ganze Zahl von 1 bis 12 bedeutet.

3. Verbindungen gemäß Anspruch 1, bei denen R_{F} für einen Rest der Formel (2)
F - (CF₂ - CF₂)_{d} - (2)
steht, und worin d für eine ganze Zahl von 1 bis 12 steht.

4. Verbindungen gemäß einem oder mehreren der Ansprüche 1 bis 3, bei denen die Alkohole der Formel (B) ausgewählt werden aus den Gruppen bestehend aus Alkandiole, Alkantriole, Alkantetraole, Kohlenhydrate, zu Polyolen reduzierte Kohlenhydrate, Oligoalkylenglykole, Polyethylenglykole, Polypropylenglykole, Polybutylenglykole, Ethylenoxid-Propylenoxid-Copolymere, Polyglycerine; Oxethylate und Propoxylate von Alkandiolen, Alkantriolen, Alkantetraolen, Kohlenhydraten, Polyolen aus reduzierten Kohlenhydraten und von Polyglycerinen; Aminoalkohole, Polyglykolamine, Oxethylate und Propoxylate von Aminoalkoholen und von Polyglykolaminen.

5. Verbindungen gemäß einem oder mehreren der Ansprüche 1 bis 4, bei denen die Alkohole der Formel (B) ausgewählt werden aus der Gruppe bestehend aus Diethylenglykol, Triethylenglykol, Tetraethylenglykol und Polyglykole mit einer mittleren Molmasse zwischen 200 g/mol und 1000 g/mol.

6. Verbindungen gemäß einem oder mehreren der Ansprüche 1 bis 5, bei denen neben den zwei Reaktionspartnern (A) und (B) ein oder mehrere weitere Reaktionspartner (C) gemeinsam kondensiert oder polykondensiert werden, wobei der oder die Reaktionspartner (C) ausgewählt werden aus der Gruppe bestehend aus Wasser, Alkylpolyglykole, Silane der Formel SiX₄, R'SiX₃, R'₂SiX₂, R'₃SiX mit
X = Cl oder Alkoxy
R' = Alkyl, Alkenyl, oder H.

7. Formulierungen, enthaltend mindestens eine der Verbindungen gemäß einem oder mehreren der Ansprüche 1 bis 6, und eine oder mehrere weitere Komponenten ausgewählt aus den Gruppen
(a) Lösemittel, insbesondere Alkohole, besonders bevorzugt Isopropanol
(b) Wasser
(c) neutrale, anionische, kationische oder amphotere Tenside
(d) Alkoxysilane, insbesondere Tetraethoxysilan
(e) Säuren
(f) Basen.

8. Verwendung der Verbindungen gemäß einem oder mehreren der Ansprüche 1 bis 6 für die Modifizierung der Eigenschaften von Oberflächen und kleinen Partikeln.

9. Verwendung der Verbindungen gemäß einem oder mehreren der Ansprüche 1 bis 6 für die Hydrophobierung und Oleophobierung von Oberflächen aus Glas, Keramik, mineralischen Baustoffen, Lacken, Metall, Kunststoff, Holz, Papier oder textilen Geweben sowie von kleinen Partikeln.

## Claims

1. Compounds preparable by the reaction of fluorous silanes (A)
R_{F}-CH₂-CH₂-SiX₃ (A)
where
R_{F} is a fully or partially fluorinated alkyl radical,
X is Cl or O-CₙH₂ₙ₊₁, and
n is an integer from 1 to 20,
with one or more alcohols of the formula (B)
R(OH)ₘ(NH₂)ₚ (B)
where
R is an organic radical consisting of C, H and O and
m and p are subject either to condition
a) m ≥ 2 and p = 0, or condition
b) m ≥ 1 and p ≥ 1.

2. The compounds according to claim 1 wherein R_{F} is a radical of the formula (1)
R_{F}' - (CH₂-CF₂)_{b}- (1)
where R_{F}' is a perfluoroalkyl group having 1 to 16 carbon atoms and b is an integer from 1 to 12.

3. The compounds according to claim 1 wherein R_{F} is a radical of the formula (2)
F - (CF₂ - CF₂)_{d} - (2)
where d is an integer from 1 to 12.

4. The compounds according to one or more of claims 1 to 3 wherein the alcohols of the formula (B) are selected from the groups consisting of alkanediols, alkanetriols, alkanetetraols, carbohydrates, carbohydrates reduced to polyols, oligoalkylene glycols, polyethylene glycols, polypropylene glycols, polybutylene glycols, ethylene oxide-propylene oxide copolymers, polyglycerols; ethoxylates and propoxylates of alkanediols, alkanetriols, alkanetetraols, carbohydrates, polyols from reduced carbohydrates and of polyglycerols; amino alcohols, polyglycolamines, ethoxylates and propoxylates of amino alcohols and of polyglycolamines.

5. The compounds according to one or more of claims 1 to 4 wherein the alcohols of the formula (B) are selected from the group consisting of diethylene glycol, triethylene glycol, tetraethylene glycol and polyglycols having an average molar mass between 200 g/mol and 1000 g/mol.

6. The compounds according to one or more of claims 1 to 5 wherein, as well as the two reactants (A) and (B), one or more further reactants (C) are conjointly condensed or polycondensed, the reactant or reactants (C) being selected from the group consisting of water, alkylpolyglycols, silanes of the formula SiX₄, R' SiX₃, R'₂SiX₂, R'₃SiX where
X = Cl or alkoxy
R' = alkyl, alkenyl, or H.

7. Formulations comprising at least one of the compounds according to one or more of claims 1 to 6 and one or more further components selected from the groups
(a) solvents, in particular alcohols, more preferably isopropanol
(b) water
(c) neutral, anionic, cationic or amphoteric surfactants
(d) alkoxysilanes, in particular tetraethoxysilane
(e) acids
(f) bases.

8. The use of the compounds according to one or more of claims 1 to 6 for modifying the properties of surfaces and small particles.

9. The use of the compounds according to one or more of claims 1 to 6 for hydrophobicizing and oleophobicizing surfaces composed of glass, ceramic, mineral building materials, lacquers, metal, plastic, wood, paper or textile fabrics and also of small particles.

## Revendications

1. Composés pouvant être préparés par réaction de silanes fluorés (A)
R_{F}-CH₂-CH₂-SiX₃ (A)
dans lesquels
R_{F} représente un groupe alkyle perfluoré ou partiellement fluoré,
X représente Cl ou O-CₙH₂ₙ₊₁ et
n représente un nombre entier de 1 à 20,
avec un ou plusieurs alcools de formule (B)
R(OH)ₘ(NH₂)ₚ (B)
dans laquelle
R représente un groupe organique composé de C, H et O, et pour m et p,
a) m ≥ 2 et p=0, ou
b) m ≥ 1 et p ≥ 1.

2. Composés selon la revendication 1, dans lesquels R_{F} représente un groupe de formule (1)
R_{F}'-(CH₂-CF₂)_{b}- (1)
dans laquelle R_{F}'- représente un groupe perfluoroalkyle contenant 1 à 16 atomes de carbone et b représente un nombre entier de 1 à 12.

3. Composés selon la revendication 1, dans lesquels R_{F} représente un groupe de formule (2)
F-(CF₂-CF₂)_{d}- (2)
dans laquelle d représente un nombre entier de 1 à 12.

4. Composés selon l'une quelconque ou plusieurs des revendications 1 à 3, dans lesquels les alcools de formule (B) sont choisis dans les groupes constitués par les alcanediols, les alcanetriols, les alcanetétraols, les glucides, les glucides réduits en polyols, les oligoalkylèneglycols, les polyéthylèneglycols, les polypropylèneglycols, les polybutylèneglycols, les copolymères oxyde d'éthylène/oxyde de propylène, les polyglycérines ; les oxéthylates et propoxylates d'alcanediols, d'alcanetriols, d'alcanetétraols, de glucides, de polyols issus de la réduction de glucides et de polyglycérines ; les aminoalcools, les polyglycolamines, les oxéthylates et propoxylates d'aminoalcools et de polyglycolamines.

5. Composés selon l'une quelconque ou plusieurs des revendications 1 à 4, dans lesquels les alcools de formule (B) sont choisis dans le groupe constitué par le diéthylèneglycol, le triéthylèneglycol, le tétraéthylèneglycol et les polyglycols de masse moléculaire moyenne comprise entre 200 g/mol et 1 000 g/mol.

6. Composés selon l'une quelconque ou plusieurs des revendications 1 à 5, dans lesquels un ou plusieurs autres partenaires de réaction (C) sont conjointement condensés ou polycondensés en plus des deux partenaires de réaction (A) et (B), le ou les partenaires de réaction (C) étant choisis dans le groupe constitué par l'eau, les alkylpolyglycols, les silanes de formule SiX₄, R'SiX₃, R'₂SiX₂, R'₃SiX, où
X = Cl ou alcoxy
R' = alkyle, alcényle ou H.

7. Formulations contenant au moins un des composés selon l'une quelconque ou plusieurs des revendications 1 à 6 et un ou plusieurs autres composants choisis dans les groupes constitués par
(a) les solvants, en particulier les alcools, de manière plus particulièrement préférée l'isopropanol
(b) l'eau
(c) les tensioactifs neutres, anioniques, cationiques ou amphotères
(d) les alcoxysilanes, en particulier le tétraéthoxysilane
(e) les acides
(f) les bases.

8. Utilisation des composés selon l'une quelconque ou plusieurs des revendications 1 à 6 pour la modification des propriétés de surfaces et de petites particules.

9. Utilisation des composés selon l'une quelconque ou plusieurs des revendications 1 à 6 pour le traitement hydrophobe et le traitement oléophobe de surfaces de verre, de céramique, de matériaux de construction minéraux, de laques, de métal, de matière plastique, de bois, de papier ou de tissus textiles ainsi que de petites particules.
